# EUROPEAN PATENT APPLICATION

(11) **EP 1 136 910 A2**
(43) Date of publication of application: **26.09.2001**
(21) Application number: 01301846.0
(22) Date of filing: 28.02.2001
(51) Int. Cl.: G06F 9/45, G06F 9/44

(54) **A method of compiling code in an object oriented programming language**

(30) Priority: 08.03.2000 GB 0005583
(71) Applicant: NOKIA MOBILE PHONES LTD., 02150 Espoo (FI)
(72) Inventor: Trux, Antoine, 00330 Helsinki (FI)
(74) Representative: Jones, Kendra Louise

(57) **Abstract**

The present invention concerns an algorithm for optimising object code having a call chain of first, second and third methods, at least two of which are constructor methods. The algorithm comprises determining whether the second method only calls the first method, and if so replacing the call from the third method to the second method with a call from the third method to the first method. This code optimising algorithm is performed by an optimiser (52), which may for example, be implemented in a communications device, such as a terminal device (60)

## Description

The present invention relates to computer programming. More particularly, it relates to the production and use of optimised object code from object oriented source code.

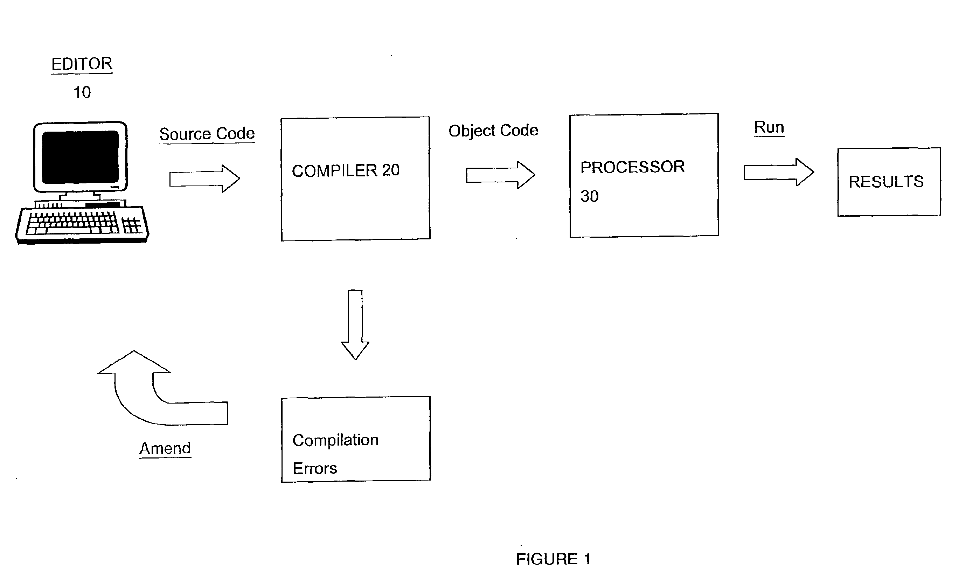

Figure 1 of the accompanying drawings illustrates a programming process. In order to develop a program, a computer is required, with an editor 10 and compiler 20, in addition to a processor 30 and operating system. The operating system provides an interface to the computer's hardware, so as to enable reading and writing to the computer's disk (memory), managing the files, etc. It also enables the programmer to activate editor and compiler software. The programmer writes a sequence of instructions using editor 10. These instructions are collectively known as source code, and are generally in ASCII format. This source code is input to the compiler 20. The compiler performs two functions. Firstly, it checks the validity of the source code and indicates syntax errors. Then, once any errors have been corrected, and the source code has been successfully compiled, the compiler translates the source code into compiled code. This compiled code takes the form of machine instructions of the computer's processor. This developed program is executed (run) by the computer's processor 30, which activates it through the operating system. During the development process, the results are checked for any errors in the program's logic, and the process repeated, if necessary.

The processor 30 used to run a program may be a processor of a particular platform (e.g. Macintosh, Pentium). In such a case, the compiler 20 translates the source code into machine code specific for that processor. Consequently, different object code is required for different platforms. However, alternatively, the processor 30 may be a virtual machine. A virtual machine may take the form of software installed on a computer to run a particular set of bytecodes that are platform independent.

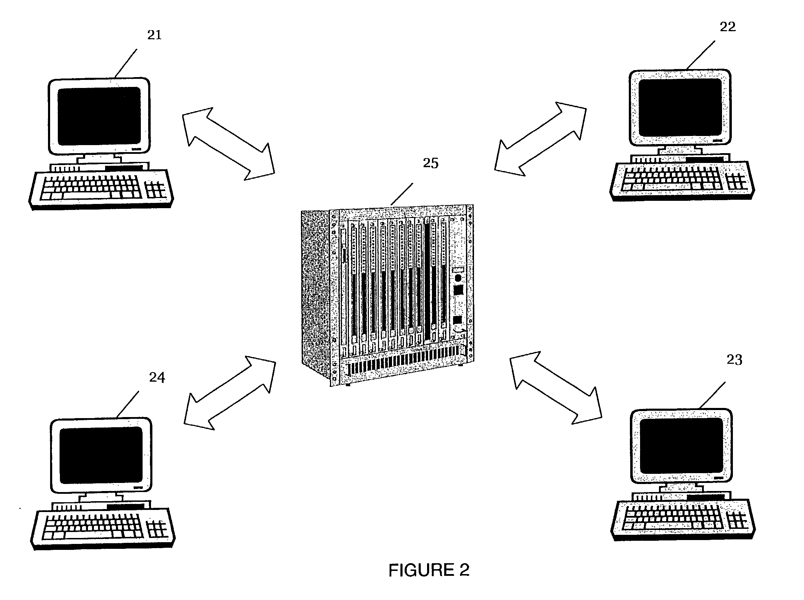

Programs may be run on the same computer on which they are written, or on another computer. If it is to be run on a different computer, the program may be loaded onto that computer or accessed remotely. Figure 2 of the accompanying drawings illustrates a network of computers, terminals 21-24 and host 25, through which remote accessing is possible. Assuming that the computers are of the same type (or they comprise a virtual machine), then the object code can be sent to and from any of the computers. For example, in an Internet scenario, if each of the terminals 21 to 24 has a Java enabled browser, then the host 25 sends Java over the net in object code format, known as bytecode. The virtual machine in each terminal's browser can understand the bytecode and interpret it into commands for the operating system of the recipient terminal (e.g., Windows, Macintosh, Solaris).

Alternatively, if, say, terminals 21 and 22 are of different types, then either the source code would need to be sent and compiled by the recipient terminal, or the host would need to determine the type of the recipient terminal and send the appropriate object code for that type.

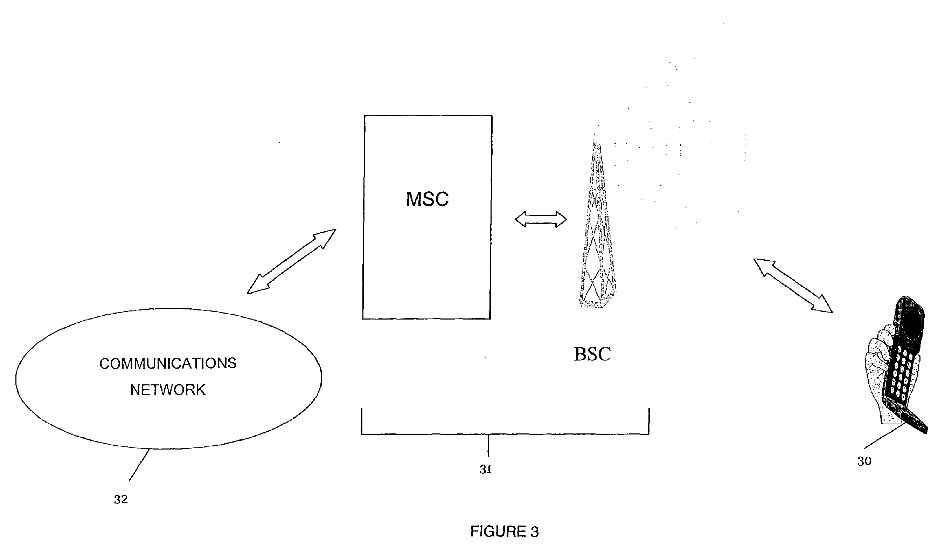

Figure 3 illustrates an alternative computer in the form of a handheld device 30. As in the example of Figure 2, object code may be stored on this device, or the device may be a wireless terminal which can access object code over a communications network 31, 32. The host may form part of the wireless or fixed network.

According to one aspect of the present invention there is provided an algorithm for optimising object code having a call chain of first, second and third methods, at least two of which are constructor methods, the algorithm comprising: determining whether the second method only calls the first method, and if so replacing the call from the third method to the second method with a call from the third method to the first method.

According to another aspect of the present invention there is provided a method of optimising object code, the method comprising: identifying non-operative constructors within the class hierarchy; and replacing a call to a non-operative constructor with a call to the first operative constructor in the call chain; and/or eliminating a call to a non-operative constructor when all the constructors in the call chain are non-operative.

According to a further aspect of the present invention there is provided an optimiser for optimising object code having a call chain of first, second and third methods, at least two of which are constructor methods, the optimiser comprising: a code analyser for determining whether the second method only calls the first method, and a code modifier for replacing the call from the third method to the second method with a call from the third method to the first method if the second method does only call the first method.

According to yet another aspect of the present invention there is provided an optimiser for optimising object code, the optimiser comprising: a constructor type identifier for identifying non-operative constructors within the class hierarchy; and a code modifier for replacing a call to a non-operative constructor with a call to the first operative constructor in the call chain; and/or eliminating a call to a non-operative constructor when all the constructors in the call chain are non-operative.

Aspects of the invention also extend to a device and/or system comprising an optimiser of the invention, as well as to a computer program for performing the algorithm/method of the invention and carrier, optimiser and device comprising such a program.

Embodiments of the present invention will now be described, by way of example, with reference to the accompanying drawings, of which:
Figure 1 illustrates the programming process;
Figure 2 illustrates a network in which a program may be run;
Figure 3 illustrates an alternative network to that shown in Figure 2;
Figure 4 illustrates a program consisting of a number of classes; Figure 5 illustrates a modified programming process according to an embodiment of the present invention; and
Figure 6 illustrates a terminal device according to an embodiment of the present invention.

The present invention is concerned with alleviating overheads inherent in object oriented programs. A brief summary of the fundamentals of object oriented programming is outlined below, so as to facilitate understanding of the present invention. Java is used as an exemplary object oriented programming language, but it will be appreciated that the invention may extend to other languages.

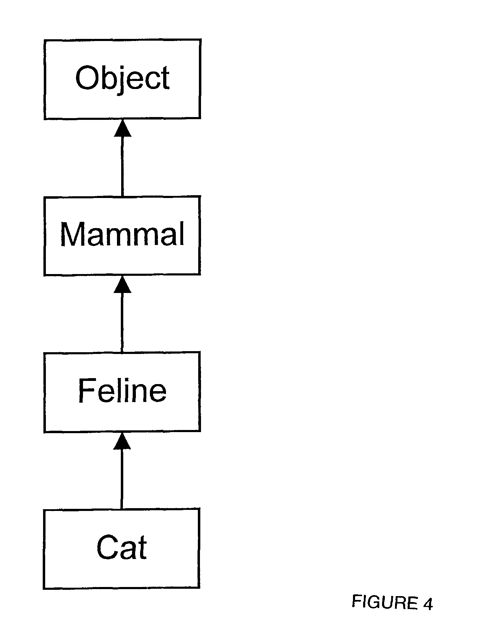

A Java program consists of classes, as illustrated in Figure 4. The program in Figure 4 has four classes: Object, Mammal, Feline and Cat. Each class inherits from the class above it. For example, Cat inherits from Feline.

The properties of a class include its name, structure (data members) and capabilities (methods). Take, for example, the code in Example 1. public class Mammal indicates the class name as Mammal, and that the class inherits from class Object (classes inherit from class Object by default, as is the case here; inheritance from other classes can be specified by the keyword extends). Next, the class includes a declaration private int numLegs = 2, which is an integer number. The declaration sets aside storage in the computer's memory for each instance of this class, the amount of which depends on the type. Finally the class comprises a method public int legs (). That is, the method is called legs. A method definition includes the method name, return type and any parameters, followed by declarations and statements (instructions). In Example 1, the method legs has a return type statement, return numLegs. Other statement types include assignment, invocation, repetition, selection and exception.

The structure of a Java program includes a class name, followed by a main method including any declarations and statements. In Example 1 the program has the class name createMammal. The main method is a void static method, indicating that it is a class method and doesn't return anything. It invokes a method callA that, in turn, creates an instance of Mammal (named myMammal) and invokes the legs method of class Mammal on this instance. When the Java virtual machine (JVM) is activated, it is given the name of the class containing the main method (createMammal in this case), and then looks for the method named main in that class and starts running it from there.

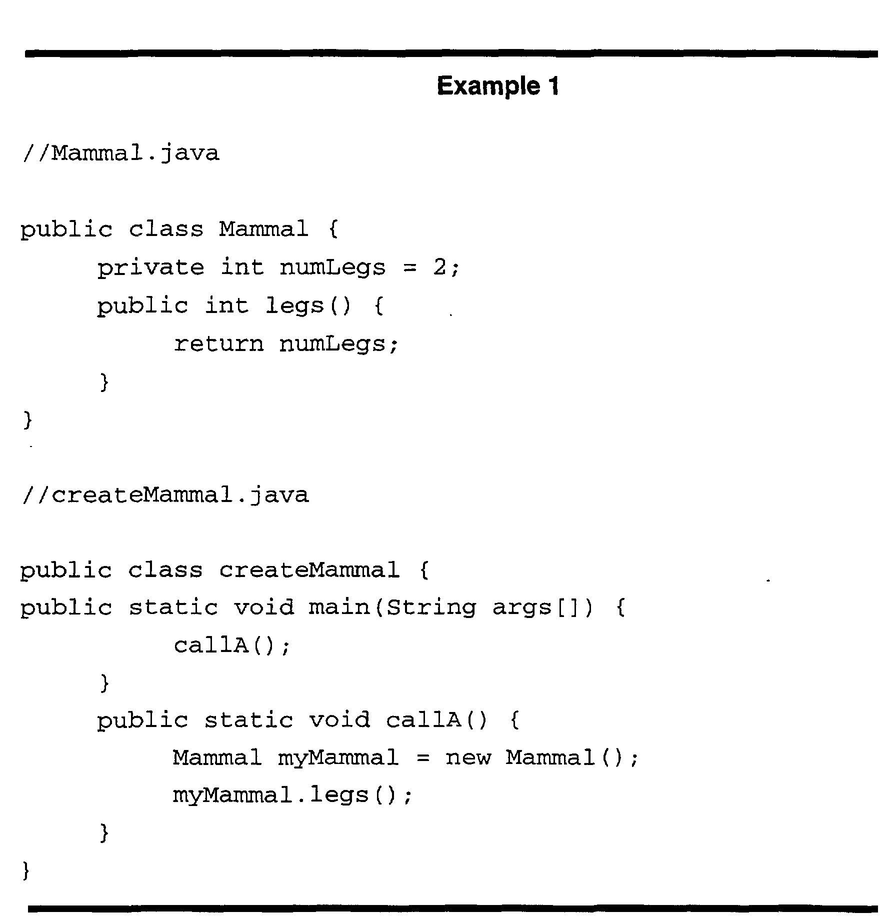

Java has a number of mechanisms dedicated to ensuring proper initialisation of objects. One such mechanism is a constructor. A constructor is called when an object is created in the program. In source code, a constructor looks like a method declaration that does not have a return type. The programmer may define constructors. In the absence of constructors defined by the programmer, the compiler will add a default constructor, a constructor that takes no parameters and simply invokes the superclass constructor without arguments. Example 2 illustrates source code with no constructors for class Mammal. As in the previous example, public class Mammal indicates the class name as Mammal, and that the class inherits from class Object. Since class Mammal comprises no explicit constructor, the compiler adds a default constructor that simply invokes the constructor of class Object without arguments. Thus, class Mammal is compiled as if the programmer had defined an empty constructor:

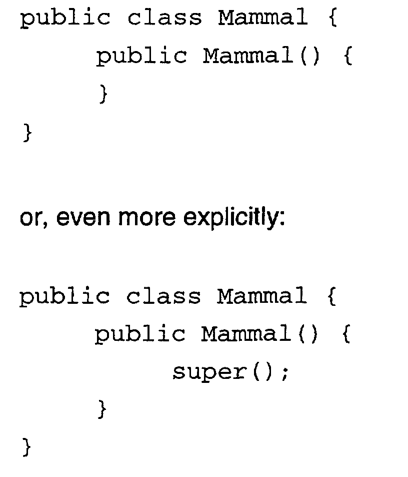

A constructor always takes the name of the class. The createMammal class has a method callA that creates myMammal as a Mammal which inherits features of its superclass. When the new operator (e.g. Mammal myMammal = new Maimnal()) is called, the JVM allocates memory for a new object, prepares the memory with well-known values, and initialises that memory by calling a constructor. Thus, the JVM ensures that initialisation code is run before the newly allocated memory can be used.

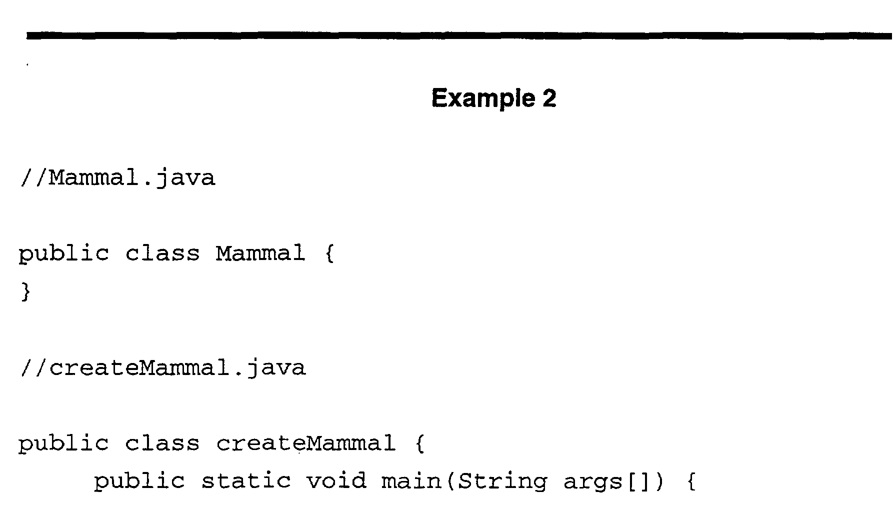

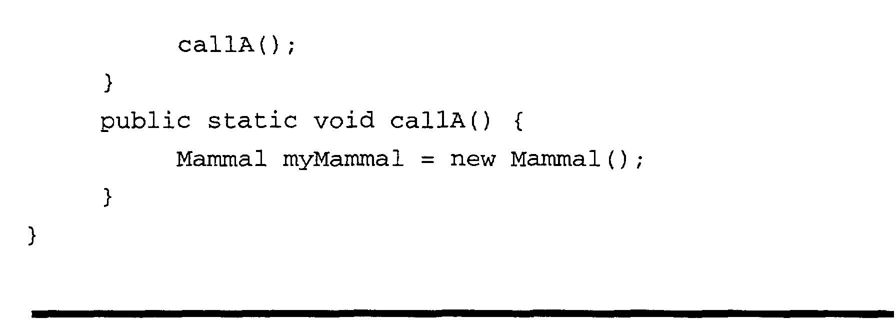

A constructor of a class may invoke another constructor of the same class. This is achieved using the this () statement. This is shown in Example 3. In this case, the constructor with no parameters (public Mammal ()) invokes the other constructor (public Mammal (int legs)) and passes 2 to the other constructor, which assigns that value to numLegs.

When a class is compiled, the Java compiler generates an instance initialisation method for each constructor in that class. This method is given a reserved name, <init>, and has the constructor return type (void) and parameters of the constructor from which it is generated.

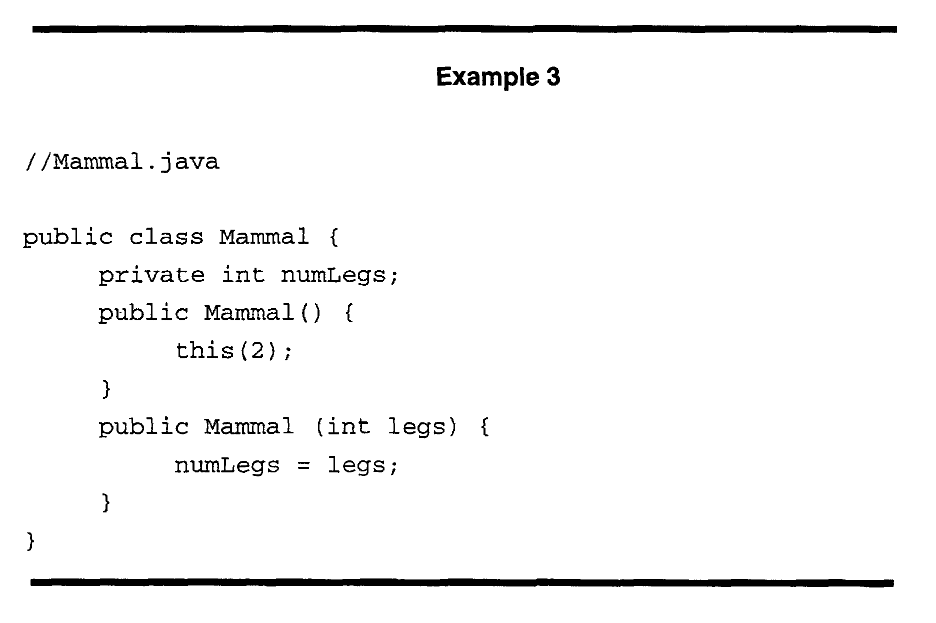

The <init> method is not actually part of the Java language, but is something which the JVM expects to see in a Java class file. Hence, it should be understood here that when the term <init> method is used, it is synonymous with constructor method.

The first statement (instruction) in an <init> method will be a call (invocation) to another <init> method in the same class (the this () invocation), or a call to the superclass's <init> method (the super () invocation). (The only exception to this rule is that class Object's <init > method does not call its superclass's <init> method because Object has no superclass; Object's <init> method actually does nothing.)

Taking the class hierarchy in Figure 4, when constructing an instance of Cat (with new Cat ()), the following methods will be called in the order as listed (assuming for simplicity that there is only one constructor per class): Cat.<init>, Feline.<init>, Mammal.<init>, Object.<init>.

Naturally, constructors can perform other tasks than calling their superclass's constructor. However, the constructors often contain no other code than the call to the superclass's constructor (super ()). This is inefficient both in terms of speed and space.

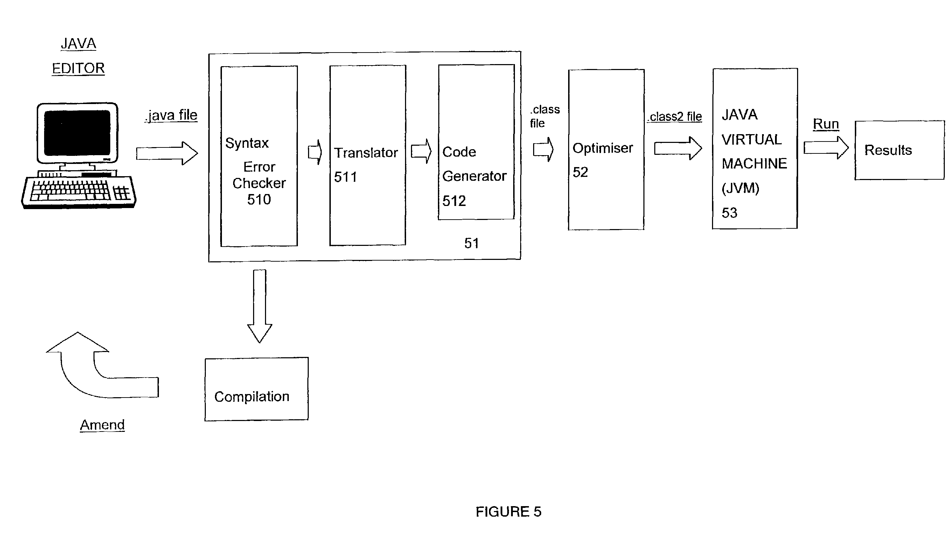

The present invention addresses this. Figure 5 illustrates a modified programming process according to an embodiment of the present invention. As can be seen, the process involves a Java editor 50, a compiler 51 and a processor (JVM) 53 as in the prior art of Figure 1. However, it also comprises an optimiser 52. The compiler of this embodiment of the invention is a conventional compiler comprising a conventional syntax error checker 510, translator 511 and code generator 512.. Accordingly, the compiler checks the validity of the source code, indicates any compilation or syntax errors, and once the errors have been corrected and the source code successfully recompiled, it translates and generates the object code (class file). However, rather than forwarding this object code directly to the JVM 53, the code generator 512 forwards it to the optimiser 52. The optimiser optimises the object code, for example, using one of the techniques explained below, and outputs an optimised object code (.class2 file) to the JVM 53. The JVM 53, in turn, executes the program.

Whilst the optimiser is illustrated as separate from the compiler in Figure 5, it will be appreciated that it could actually form part of the compiler.

The optimiser 52 aims to alleviate constructor overhead on the following basis. Firstly, it can be determined statically from the bytecode whether a constructor performs any function other than calling its superclass's constructor. Secondly, it can also be determined statically, from anywhere in the code, which class's constructor is being called. The latter is true in Java, for example, because the constructors are called only by the instruction invokespecial, which is specified to be statically resolved. In an embodiment of the present invention, this principle may be implemented by the optimiser 52 in accordance with the following routine.

### Optimiser Routine

(1) Starting from the top of the class hierarchy, each <init> method of each class is examined. Let's call such a method "init 1".
   If init 1 contains no other code than a call to another <init> method that takes no parameter, then init 1 is marked as non-operative.
   Follow the chain of <init> method calls from init 1, and
   If all the methods in that chain were marked earlier as non-operative, eliminate the call to <init> in init 1;
   Otherwise, replace the call to <init> in init 1 with a call to the first <init> method in the call chain that was not marked as non-operative.
(2) Examine all other methods than <init> methods. In these methods, examine each call to an <init> method. Let's call such a call "call 1".
   If call 1's callee was not marked as a non-operative method in step 1, processing of call 1 is stopped;
   Otherwise, call 1's callee is examined. In this case:
   If call 1's callee has a call to an <init> method, then we know that that <init> method was not marked as a non-operative method in step 1: hence call 1 is replaced with a call to that <init> method;
   Otherwise, call1 is eliminated.
(3) Since the constructors marked as non-operative are not used any further, then they may optionally be removed altogether (assuming that they form a closed set and cannot be called by other classes; otherwise, this step must not be performed).

This technique removes all the non-operative constructors from Java class files. Thus, the resultant modified Java class file (e.g. .class2 file in Figure 5) is smaller than the original (e.g. .class file in Figure 5), resulting in space savings. In addition, many object constructions are considerably sped up because only the useful parts of the constructors of the original Java class file are retained by the optimiser in the modified file.

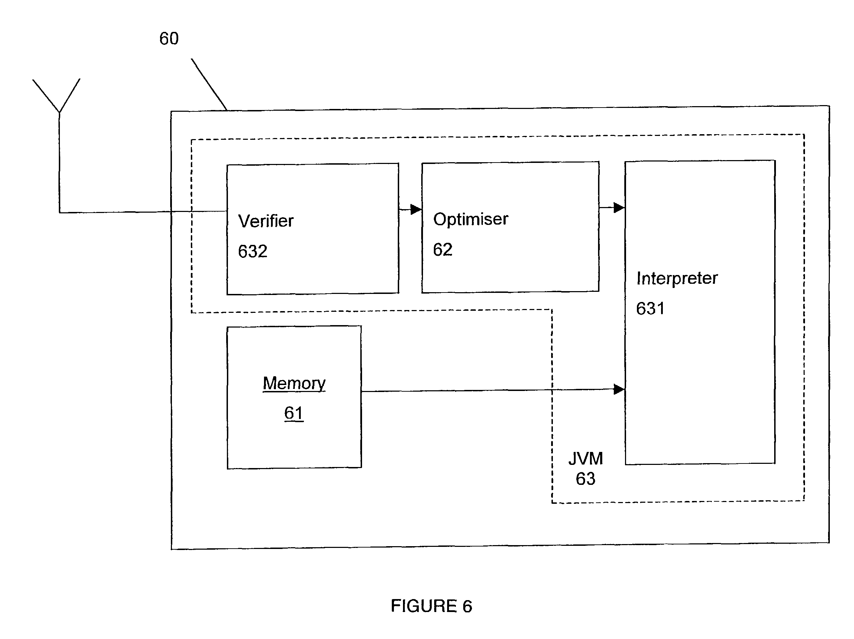

The optimiser that implements this routine may form part of any of the communications devices in Figures 2 and 3. In a preferred embodiment, the optimiser forms part of a terminal device, for example as illustrated in Figure 6. The terminal device 60 of Figure 6 may download files of object code from the communications network and also retrieve local files stored in the device's memory 61.

Code received from the network (e.g. .class file) is input to the JVM's verifier 632 and is verified prior to input to the optimiser 62. The optimiser 62, in turn, optimises the code in accordance with the present invention, and the resultant optimised code (e.g. .class2 file) is then forwarded to the JVM's interpreter 631 for interpretation and execution.

In contrast, local files are preprocessed once by the optimiser 62 for optimisation according to the present invention. They are then stored, in optimised format in memory 61. It is usual practice for a JVM verifier 632 to be run on downloaded files, but not local ones. Hence, in this embodiment the optimised local files (e.g. .class2 files) are forwarded directly to the interpreter 631 for interpretation and execution, bypassing the verifier 632.

In an alternative embodiment, the optimiser may form part of an MSC/BSC. In this case, the MSC/BSC may receive and/or store object code (e.g. .class file) and optimise that code in accordance with the present invention (e.g. .class2 file), prior to transmitting it to the recipient terminal. The recipient terminal may then run the received optimised code. Such a solution is advantageous if the recipient terminal is a dummy terminal (in that it receives all object code from a remote server), as it eliminates the need for an optimiser in such a terminal. However, either the optimised code would need to bypass verification (e.g. by turning the verifier of a conventional JVM off) in order for it to run, or a conventional verifier would need to be modified to exclude the current requirement that an <init> method (except Object.<init>) must start with a call to an <init> method.

Of course, a hybrid arrangement is also possible in which the optimiser is provided both in the network (e.g. MSC/BSC) for downloaded files and in the terminal for local files.

Optimising code according to an embodiment of the present invention will now be described with reference to an example (Example 4).

Let us note that since the constructors of classes A, C and D contain no statement in the source code, the programmer could leave them out. In this case, the compiler would automatically generate constructors (default constructors) identical to the ones shown here, resulting in exactly the same bytecodes.

In the programming process of Figure 5, the source code of Example 4 may be output from the Java editor 50 and forwarded to the compiler 51. As mentioned above, the compiler of this Figure comprises a conventional syntax error checker 510, translator 511, and code generator 512. Accordingly, the compiler checks the validity of the source code, indicates any compilation or syntax errors, and once the errors have been corrected and the source code successfully recompiled, it translates and generates the object code (.class file), the bytecodes of which are shown below. (The files Object.class, A.class, etc., actually contain binary data; only their disassembled form is shown here.)

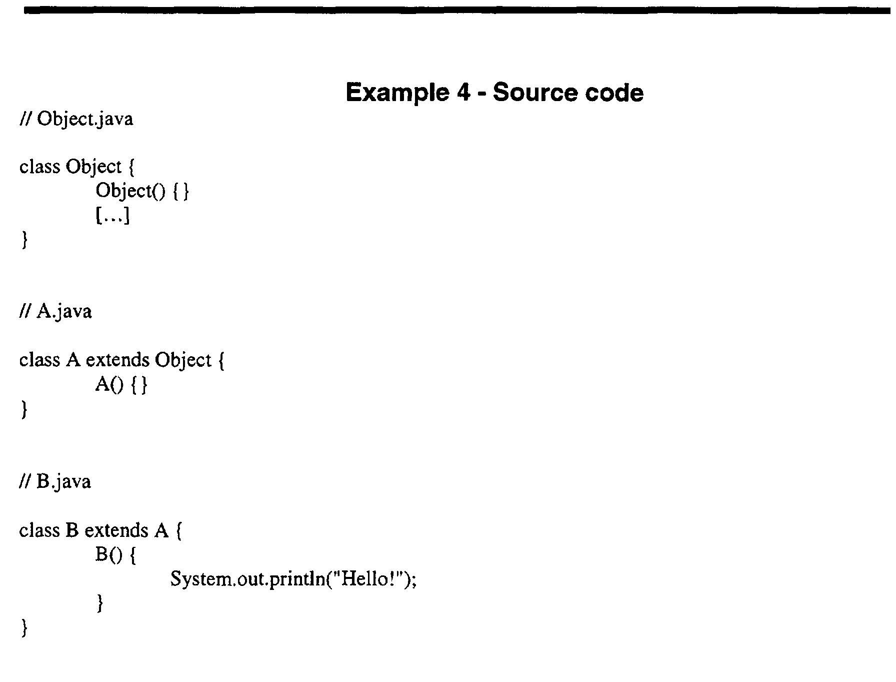

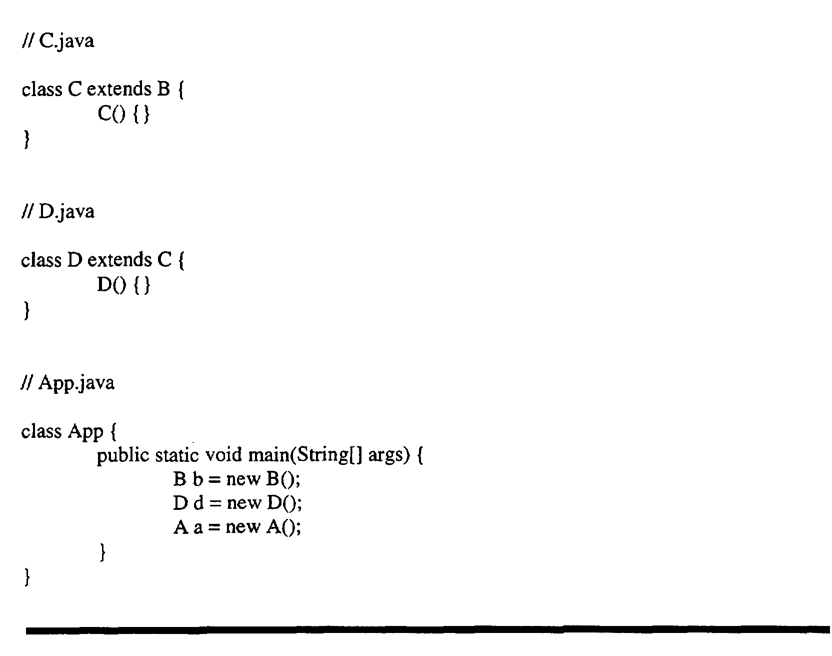

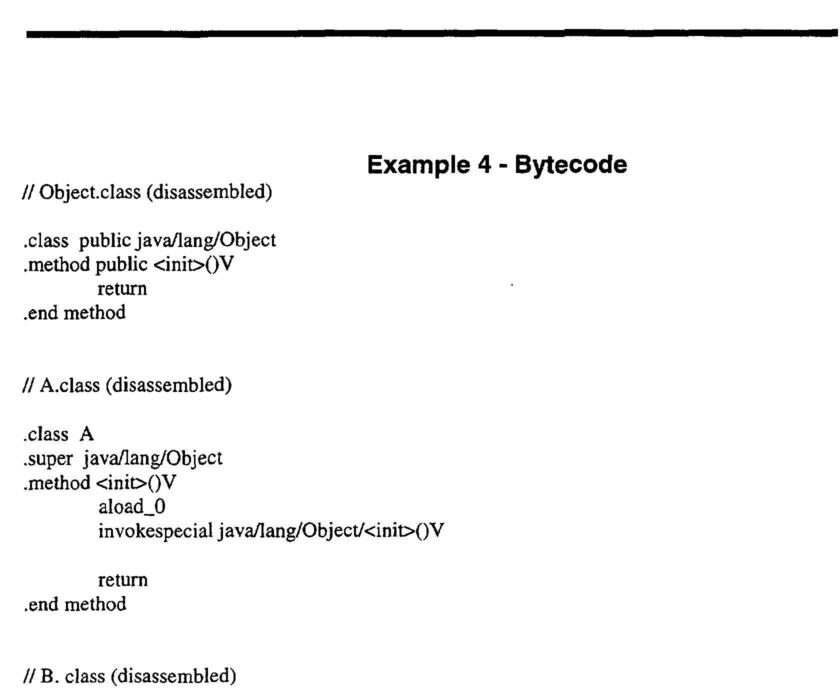

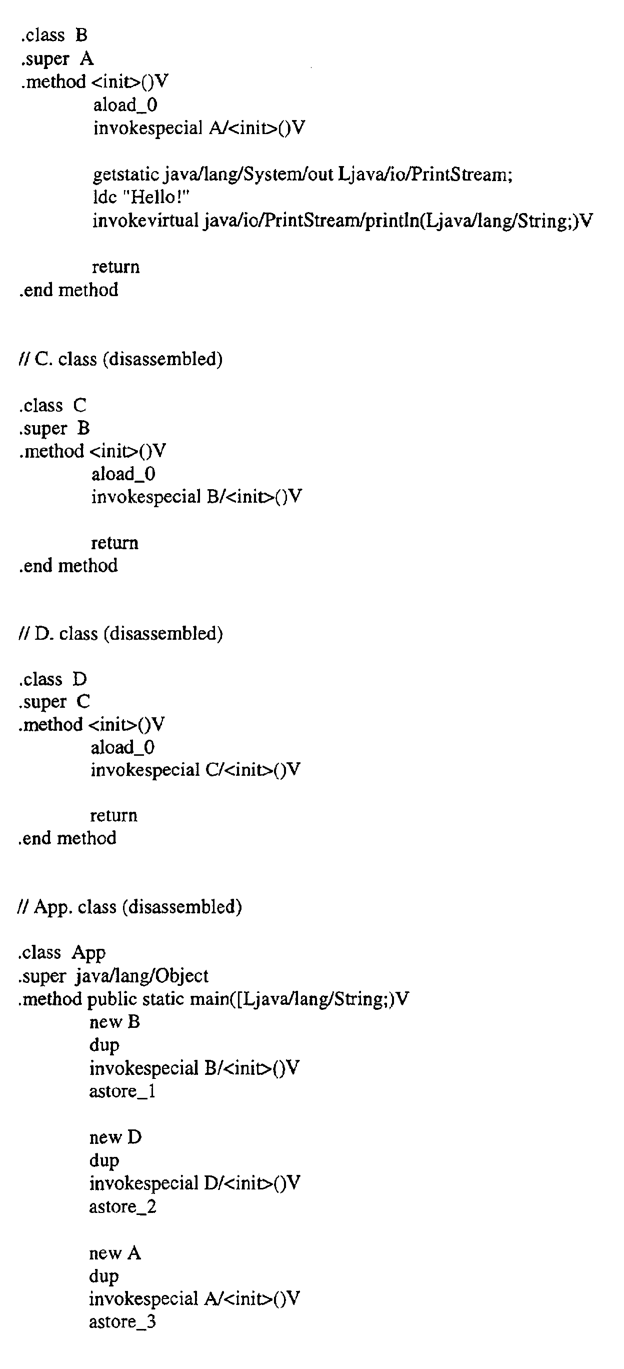

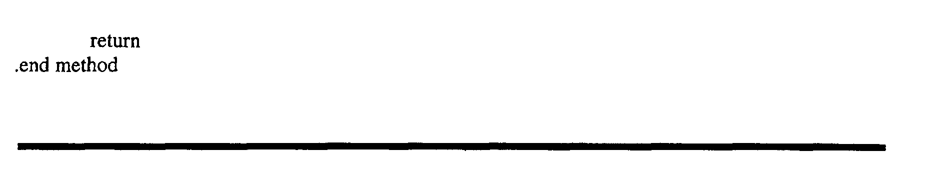

Example 4 illustrates the class hierarchy Object. java, A. java, B. java, C. java, D. java and App. java.

The Object class, which is part of the Java library, contains a constructor with no parameters, Object (). Since class Object has no superclass, Object() does not invoke any superclass constructor; instead, this constructor just returns. (The Object class has a lot of code in addition to Object (), but that code is not relevant to our discussion and therefore is not shown.)

The A class inherits from the Object class, by virtue of the code class A extends Object. The A class is declared to have a single method. Since this method, A (), is a constructor, it takes on the name of the class. Furthermore, it invokes a constructor of the next class in the hierarchy (i.e. of the class Object in this example). (Let us recall that since the statement super ( ) is not explicitly stated in this method, it is automatically generated by the compiler to invoke Object().)

The B class inherits from the A class, by virtue of the code class B extends A. The class itself comprises a constructor, B(), with no parameter. This constructor has a statement, System. out. printin ("Hello!");, which prints a string onto the standard output. In addition, this constructor invokes a constructor of the next class in the hierarchy (i.e. of the class A in this example).

The C class inherits from the B class, by virtue of the code class C extends B. The C class is declared to have a single method. Since this method, C (), is a constructor, it takes on the name of the class. Furthermore, it invokes a constructor of the next class in the hierarchy (i.e. of the class B in this example).

The D class inherits from the C class, by virtue of the code class D extends C. The D class is declared to have a single method. Since this method, D (), is a constructor, it takes on the name of the class. Furthermore, it invokes a constructor of the next class in the hierarchy (i.e. of the class C in this example).

The App class contains the program. It comprises a method, namely the main method. When the JVM is activated, it is given the name of the class, and then looks for the method named main in that class and starts running it from there (main must be declared public, static and returning void). This method contains three object creations, creating new instances of classes B, D and A.

In the programming process of Figure 5, after the compiler has successfully generated the object code (.class file), it forwards it to the optimiser 52. Let us now expose how the optimiser routine described above works in Example 4.

In step 1 of the optimiser routine described above, the optimiser optimises the object code by examining each individual .class file, in the order Object, A, B, C, D, looking for constructors that only call the superclass's constructor (or even, in the case of Object (), do nothing but return), marking these methods as non-operative in the .class file and following the chain of constructor calls to replace calls to a respective superclass's constructor with a call to the first operational constructor above it in the hierarchy.

Step 1 is shown below for Example 4.

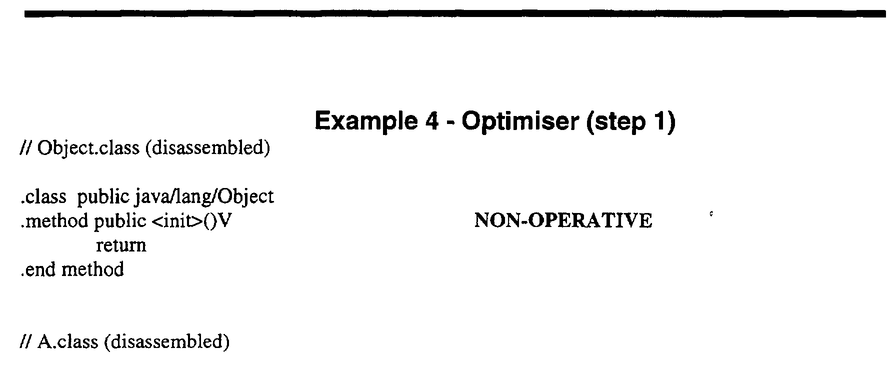

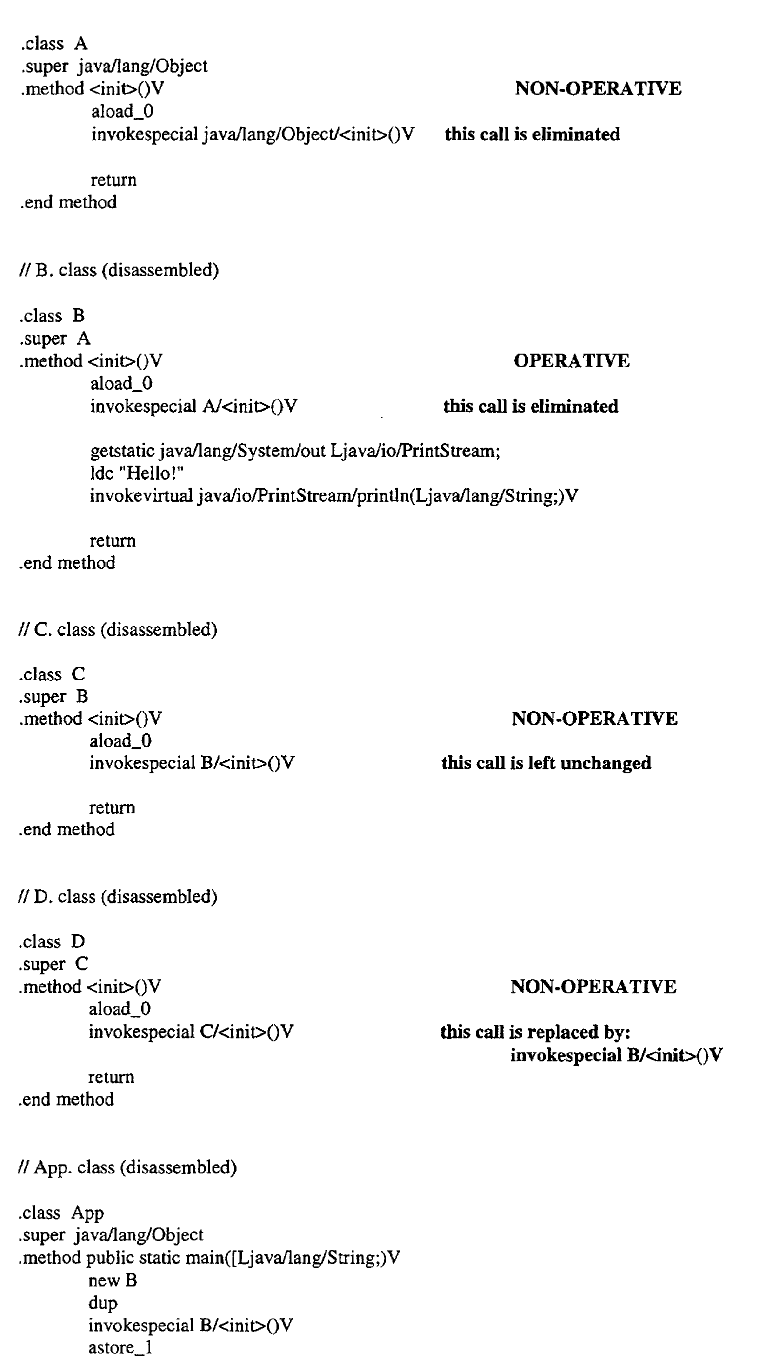

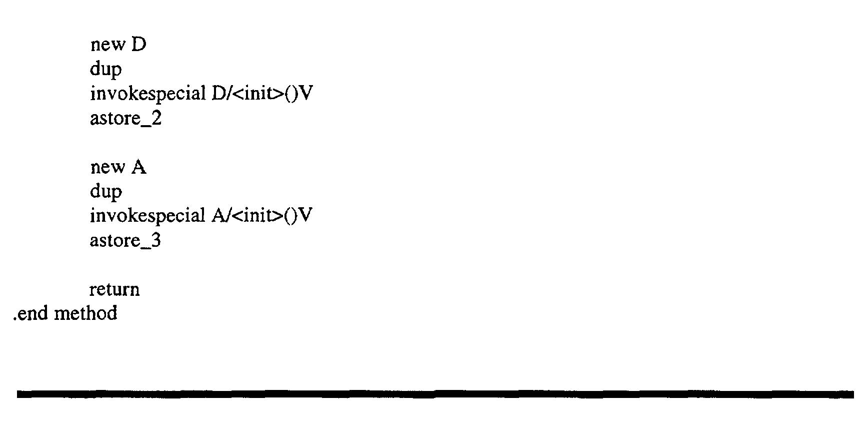

The constructor of class Object (Object. <init>) does nothing but returns. Therefore, it is marked as non-operative.

The constructor of class A (A.<init>) contains no other code than a call to another <init> method. Therefore, it is marked as non-operative. Furthermore, since the chain of <init> methods called from A.<init> consists solely of Object. <init>, and since Object. <init> was marked as non-operative, the call to Object. <init> (and its associated instruction a_loado) is eliminated from A.<init>.

The constructor of class B (B. <init>) contains other code than a call to another <init> method. Therefore, it is not marked as non-operative (i.e., it is marked as operative). Furthermore, since the chain of <init> methods called from B.<init> consists of A.<init> and Object <init>, and since both A.<init> and Object. <init> were marked as non-operative, the call to A. <init> (and its associated instruction a_load0) is eliminated from B.<init>.

The constructor of class C (C. <init>) contains no other code than a call to another <init> method. Therefore, it is marked as non-operative. Furthermore, since the chain of <init> methods called from c.<init> consists of B. <init>, A. <init> and Object.<init>, and since one of these <init> methods, B.<init>, was marked as operative, the call to B.<init> (and its associated instruction a_load0) is not eliminated from C.<init>. And then, since the first <init> method that was not marked as non-operative in the chain of <init> methods called from c. <init> is B.<init>, the call to B.<init> is replaced by itself; that is, the call to B.<init> is left unchanged in C.<init>.

The constructor of class D (D.<init>) contains no other code than a call to another <init> method. Therefore, it is marked as non-operative. Furthermore, since the chain of <init> methods called from D.<init> consists of C. <init>, B. <init>, A.<init> and Object.<init>, and since one of these <init> methods, B. <init>, was marked as operative, the call to C.<init> (and its associated instruction a_load0) is not eliminated from D. <init>, And then, since the first <init> method that was not marked as non-operative in the chain of <init> methods called from D.<init> is B.<init>, the call to C.<init> is replaced by a call to B.<init>.

The disassembled bytecodes for Example 4 after step 1 are shown below.

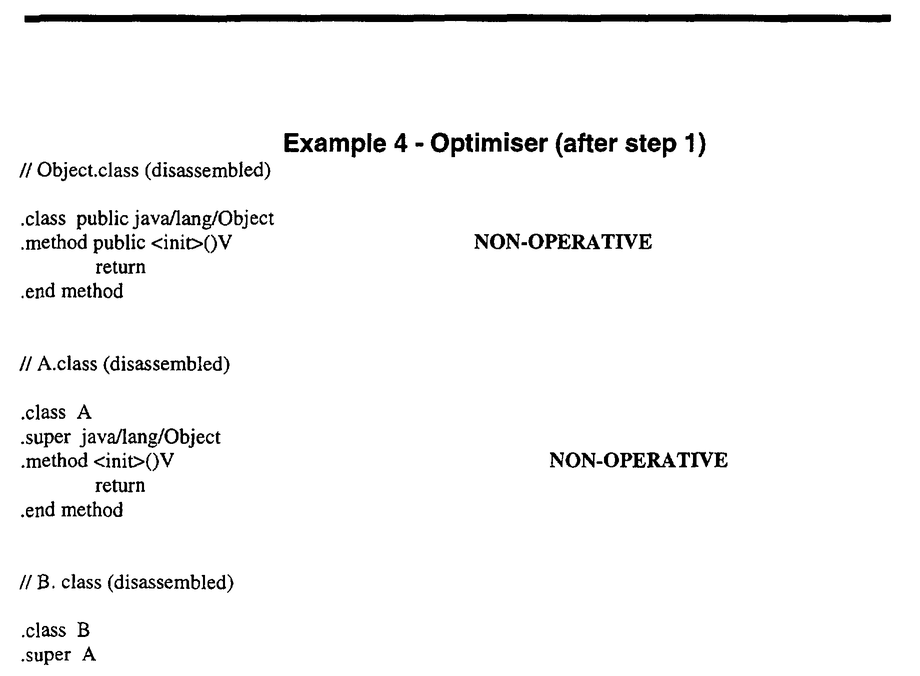

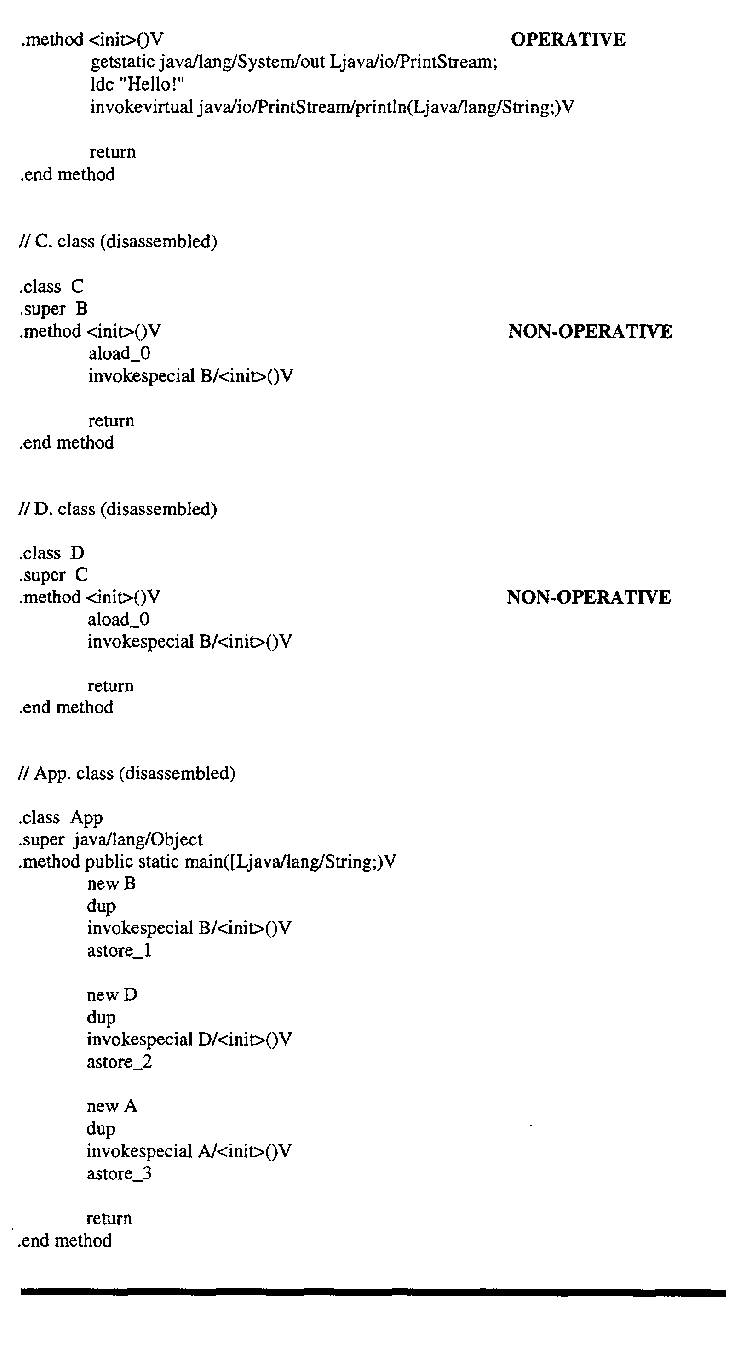

In step 2 of the optimiser routine described above, the optimiser optimises the object code by examining all other methods than <init> methods in each individual .class file, in any order, looking for calls to <init> methods, and possibly replacing these calls by more efficient ones.

Step 2 is shown below for Example 4.

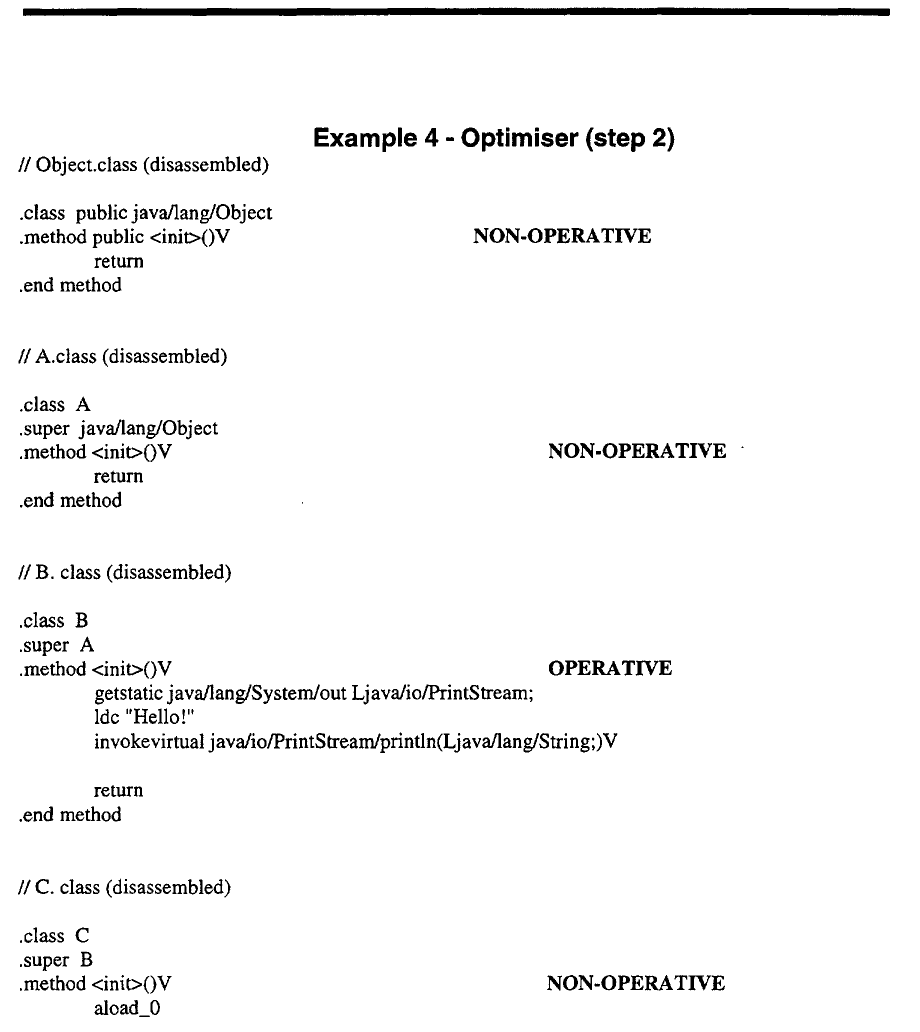

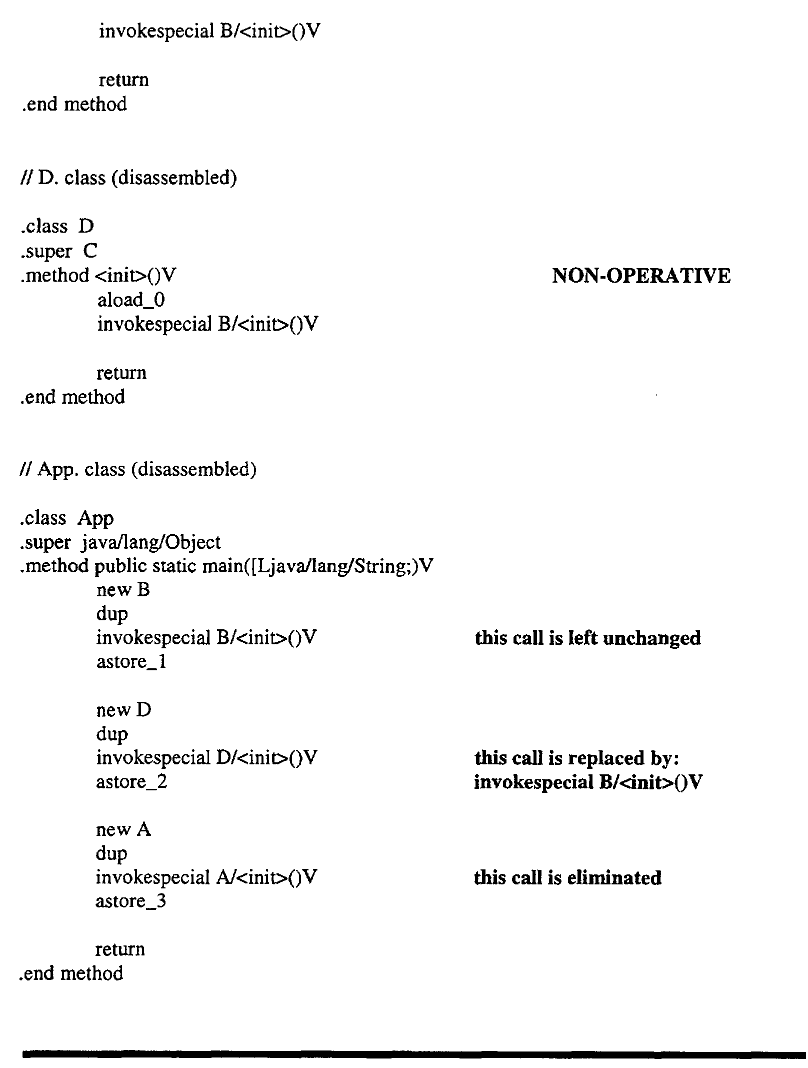

In this example, all the calls to <init> methods from non <init> methods are located in App.main. Let us review each of these three calls.

B.<init> was marked as operative. Therefore, the call to B . <init> is left unchanged in App.main.

D.<init> was marked as non-operative. Furthermore, D.<init> contains a call to B.<init>. Therefore, the call to D. <init> is replaced by a call to B.<init> in App.main.

A.<init> was marked as non-operative. Furthermore, A.<init> contains no call to any <init> method. Therefore, the call to A.<init> (and its associated instruction dup) is eliminated from App.main.

The disassembled bytecodes after step 2 are shown below.

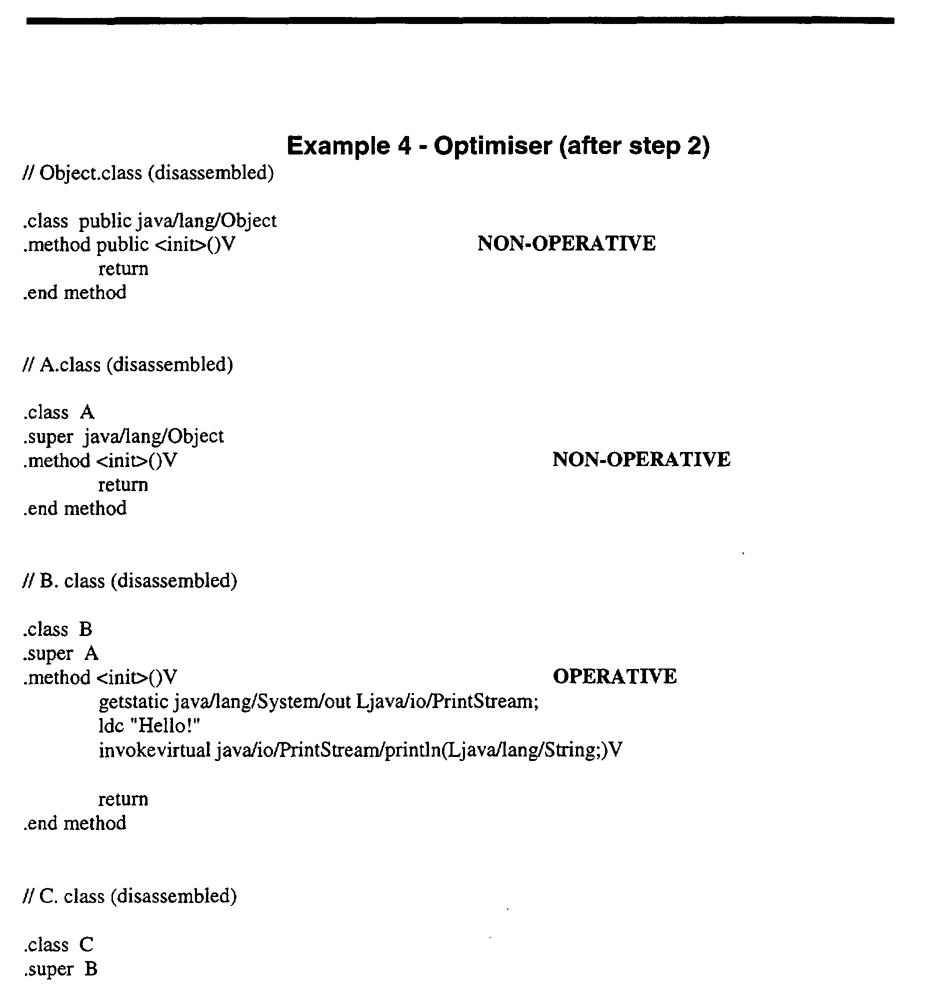

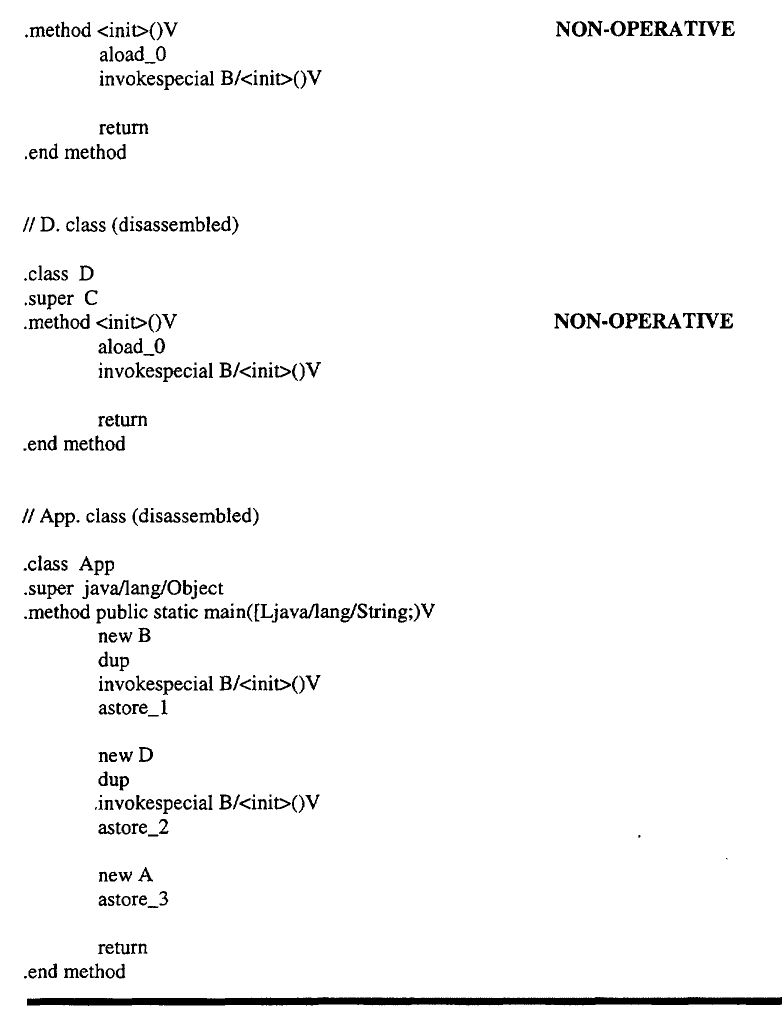

In step 3 of the optimiser routine described above, the optimiser optimises the object code by removing all the <init> methods that were marked as non-operative. (Let us recall that this step is optional and may only be performed if the classes to be modified form a closed set, because if not the <init> methods could be called by other classes and therefore cannot be removed.)

Step 3 is shown below for Example 4.

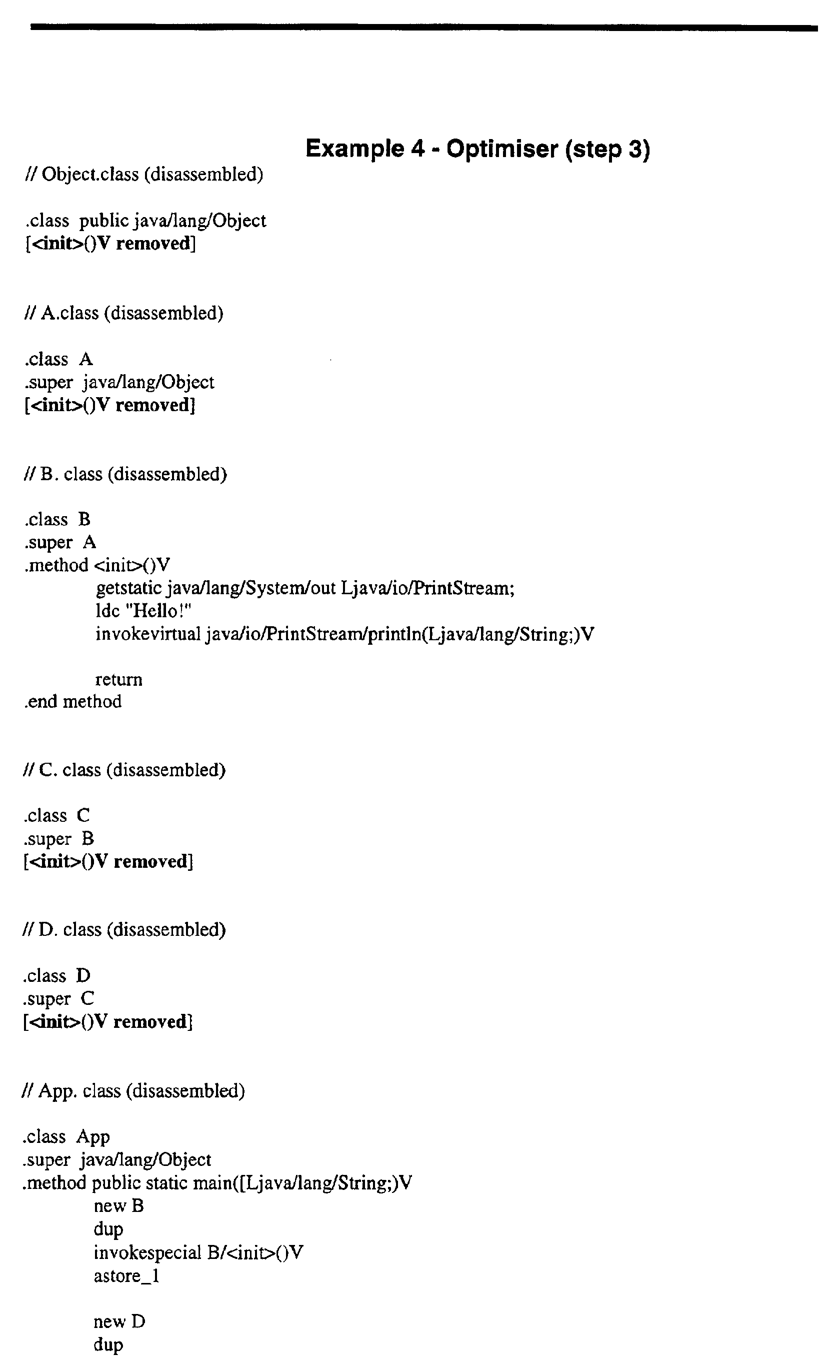

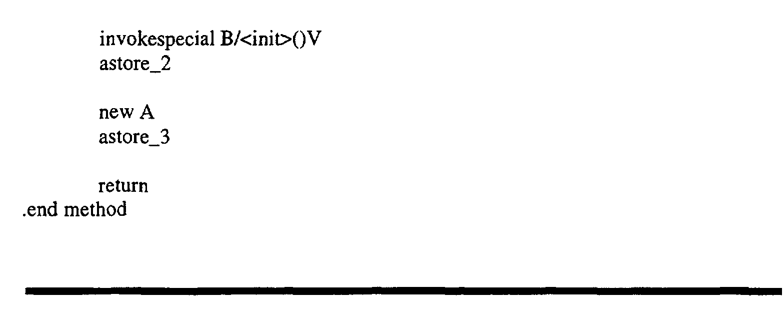

The present invention includes any novel feature or combination of features disclosed herein either explicitly or any generalisation thereof irrespective of whether or not it relates to the claimed invention or mitigates any or all of the problems addressed.

In view of the foregoing description it will be evident to a person skilled in the art that various modifications may be made within the scope of the invention.

## Claims

1. An algorithm for optimising object code having a call chain of first, second and third methods, at least two of which are constructor methods, the algorithm comprising:
determining whether the second method only calls the first method, and if so:
replacing the call from the third method to the second method with a call from the third method to the first method.

2. An algorithm as claimed in claim 1, further comprising eliminating the second method if that method only calls the first method.

3. An algorithm as claimed in claim 1 or 2, wherein the third method is a non-constructor method.

4. An algorithm as claimed in any preceding claim, wherein the first method is an object constructor.

5. An algorithm as claimed in any of claims 1 to 3, wherein the first method is a constructor which does not only call another constructor.

6. A method of optimising object code, the method comprising:
identifying non-operative constructors within the class hierarchy; and
replacing a call to a non-operative constructor with a call to the first operative constructor in the call chain; and/or
eliminating a call to a non-operative constructor when all the constructors in the call chain are non-operative.

7. A method as claimed in claim 6, further comprising:
examining non-constructor methods which call a constructor; and
replacing a call from a non-constructor method to a non-operative constructor with a call to the first operative constructor in the call chain; and/or
eliminating a call to a non-operative constructor when all the constructors in the call chain are non-operative.

8. A method as claimed in claim 6 or 7, further comprising eliminating non-operative constructors in the call chain, if they do not form part of another call chain.

9. A computer program for performing the algorithm of any of claims 1 to 5.

10. A computer program for performing the method of any of claims 1 to 8.

11. A carrier having a computer program as claimed in claim 9 or 10.

12. An optimiser for optimising object code, comprising a computer program as claimed in claim 9 or 10.

13. An optimiser for optimising object code having a call chain of first, second and third methods, at least two of which are constructor methods, the optimiser comprising:
a code analyser for determining whether the second method only calls the first method, and
a code modifier for replacing the call from the third method to the second method with a call from the third method to the first method if the second method does only call the first method.

14. An optimiser as claimed in claim 13, further comprising a code eliminator for eliminating the second method if that method only calls the first method.

15. An optimiser as claimed in claim 13 or 14, wherein the third method is a non-constructor method.

16. An optimiser as claimed in of claims 13 to 15, wherein the first method is an object constructor.

17. An optimiser as claimed in any of claims 13 to 15, wherein the first method is a constructor which does not only call another constructor.

18. An optimiser for optimising object code, the optimiser comprising:
a constructor type identifier for identifying non-operative constructors within the class hierarchy; and
a code modifier for replacing a call to a non-operative constructor with a call to the first operative constructor in the call chain; and/or eliminating a call to a non-operative constructor when all the constructors in the call chain are non-operative.

19. An optimiser as claimed in claim 18, wherein the code modifier is arranged to:
examine non-constructor methods which call a constructor; and
replace a call from a non-constructor method to a non-operative constructor with a call to the first operative constructor in the call chain; and/or
eliminate a call to a non-operative constructor when all the constructors in the call chain are non-operative.

20. An optimiser as claimed in claim 18 or 19, wherein the code modifier is arranged to eliminate non-operative constructors in the call chain, if they do not form part of another call chain.

21. A compiler comprising an optimiser as claimed in any of claims 12 to 20.

22. A device comprising an optimiser as claimed in any of claims 12 to 20.

23. A communications device comprising an optimiser as claimed in any of claims 12 to 20.

24. A communications device as claimed in claim 23 which is a terminal.

25. A communications device as claimed in claim 24 which is a handset.

26. A communications device as claimed in claim 25 which is a mobile phone.

27. A communications device as claimed in claim 23 which is a host.

28. A communications device as claimed in claim 27, wherein the host is a server.

29. A switch for a communications network, comprising a device as claimed in claim 27 or 28.

30. A switch as claimed in claim 29 for a mobile communications network.

31. A switch as claimed in claim 30, which is an MSC or BSC.

32. A communications system comprising an optimiser as claimed in any of claims 12 to 20 and a processor for processing the optimised code.
